# DEMANDE DE BREVET EUROPEEN

(11) **EP 1 696 166 A1**
(43) Date de publication de la demande: **30.08.2006**
(21) Numéro de dépôt: 06300139.0
(22) Date de dépôt: 15.02.2006
(51) Int. Cl.: F16L 41/08, F16L 19/02

(54) **Dispositif de positionnement d'un tuyau rigide par rapport à une tuyauterie**

(30) Priorité: 25.02.2005 FR 0550524
(71) Demandeur: Renault s.a.s., 92100 Boulogne Billancourt (FR)
(72) Inventeur: Becamel, Laurent, 78140, VELIZY (FR); Devaux, Bertrand, 78960, VOISINS LE BRETONNEUX (FR)

(57) **Abrégé**

Dispositif de positionnement d'un tuyau (1) rigide par rapport à une tuyauterie (2) d'axe (L) caractérisé en ce que le tuyau (1) rigide comporte un élément d'indexage, formé d'une rondelle plate (4) pourvue d'une extension latérale (7) sur un support (3) porté par la tuyauterie (2) de façon à assurer un positionnement géométrique précis du tuyau (1) rigide par rapport à l'axe (L).

## Description

L'invention concerne un dispositif de positionnement d'un tuyau rigide par rapport à une tuyauterie.

L'invention concerne, en particulier, un tuyau de prise de pression sur une ligne d'échappement.

Pour assurer le fonctionnement d'un filtre à particules dans une ligne d'échappement, des moyens de contrôle de débit des gaz d'échappement circulant dans le filtre à particules sont utilisés. Le fonctionnement des moyens de contrôle est piloté par des moyens de commande recevant, en entrée, des informations relatives aux conditions de fonctionnement du filtre délivrées par des capteurs implantés dans la ligne, l'un des capteurs étant constitué par un capteur de pression différentielle entre un point situé en amont du filtre à particules et un point situé en aval du filtre à particules. Dans la pratique, la prise de pression s'effectue au moyen de tuyaux rigides de grande longueur en inox fixés par des extensions latérales de maintien sur le filtre à particules.

Chaque tuyau est incliné selon un angle d'au moins 3° par rapport à l'axe horizontal défini par la ligne d'échappement de façon à éviter les condensas et leur éventuelle congélation.

Actuellement, pour garantir l'indexation de ces tuyaux, un gabarit est appliqué manuellement lors du montage des tuyaux sur la ligne. Le montage d'un gabarit nécessite une étape supplémentaire dans le procédé ce qui est coûteux dans un procédé industriel. De plus, ce montage est dépendant des dispersions géométriques dues aux tolérances d'assemblage ce qui ne permet pas d'assurer une indexation fiable et reproductible.

Afin de pallier ces inconvénients, l'invention a pour objet d'assurer l'indexage d'un tuyau de pression directement sur la ligne d'échappement.

Plus généralement, l'invention a pour objet d'assurer l'indexage d'un tuyau rigide sur une tuyauterie.

A cet effet, l'invention propose caractérisé en ce que le tuyau rigide comporte un élément d'indexage, formé d'une rondelle plate pourvue d'une extension latérale sur un support porté par la tuyauterie de façon à assurer un positionnement géométrique précis du tuyau rigide par rapport à l'axe.

Selon d'autres caractéristiques de l'invention, le support comporte une rainure coopérant avec l'extension latérale de la rondelle plate.

Selon d'autres caractéristiques de l'invention, la rondelle plate est fixée sur le tuyau par soudage.

Selon d'autres caractéristiques de l'invention, le support est fixé sur la tuyauterie par soudage.

Selon d'autres caractéristiques de l'invention, le support est fixé sur la tuyauterie par fluoperçage.

Selon d'autres caractéristiques de l'invention, le tuyau est monté radialement sur le support.

Selon d'autres caractéristiques de l'invention, la rondelle plate est fixée en appui contre une butée de l'extrémité du tuyau.

Selon d'autres caractéristiques de l'invention, le tuyau est un tuyau de prise de pression et en ce que la tuyauterie est une ligne d'échappement.

Selon d'autres caractéristiques de l'invention, une ligne d'échappement comporte un tuyau rigide indexé.

Selon d'autres caractéristiques de l'invention, un procédé de montage d'un dispositif de positionnement d'un tuyau rigide est caractérisé en ce qu'
- une vis raccord est enfilée sur le tuyau
- la rondelle plate est fixée à l'extrémité du tuyau
- une butée est réalisée à l'extrémité de façon à former un appui pour la rondelle plate
- le tuyau est inséré dans le support de telle façon que l'extension latérale de la rondelle plate coopère avec la rainure du support
- la vis raccord est vissée dans le support

D'autres caractéristiques et avantages de l'invention apparaîtront à la lecture de la description d'exemples de réalisation en référence aux figures annexées.

La figure 1 représente une vue en perspective d'un tuyau de pression indexé sur une ligne d'échappement selon un premier mode de réalisation de l'invention.

La figure 2 représente une vue en coupe longitudinale selon un plan P d'un tuyau de pression indexé sur une ligne d'échappement selon un premier mode de réalisation de l'invention.

La figure 3 représente une vue en coupe transversale selon A-A passant par la rondelle plate d'un tuyau de pression indexé selon un premier mode de réalisation de l'invention.

La figure 4 représente une vue en perspective d'un tuyau de pression indexé sur une ligne d'échappement selon un deuxième mode de réalisation de l'invention.

La figure 5 représente une vue en coupe longitudinale selon un plan D d'un tuyau de pression indexé sur une ligne d'échappement selon un deuxième mode de réalisation de l'invention.

Des éléments identiques ou analogues sont désignés par les mêmes chiffres de référence.

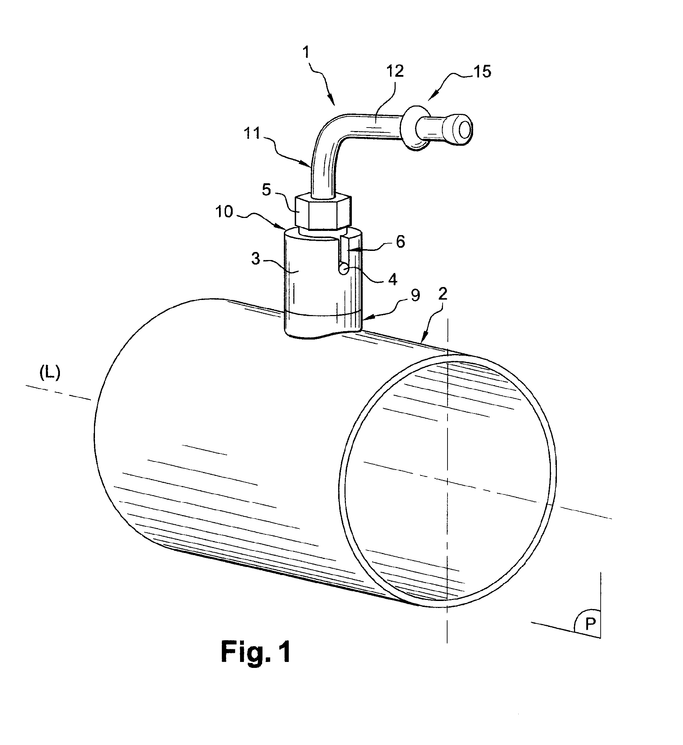

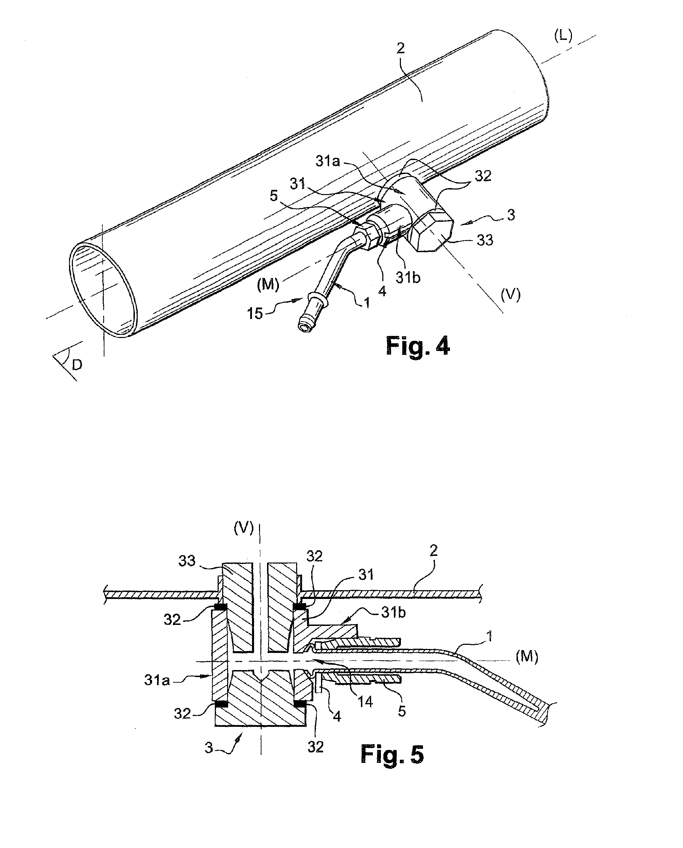

Telle que représentée à la figure 1 et à la figure 4, une ligne d'échappement 2 tubulaire d'axe L comporte une cavité sur sa paroi de façon à y insérer perpendiculairement à l'axe L un support 3. Le support 3 est fixé à la ligne 2 par exemple, par soudage ou fluoperçage. Un tuyau de prise de pression rigide 1 qui comporte une partie 11 d'axe M et une partie 12 formant un angle supérieur à 90° est inséré dans ce support 3 au niveau de sa partie 11. La partie 12 est orientée selon un angle d'environ 3° par rapport à l'axe perpendiculaire à l'axe M. Cette orientation permet l'écoulement du fluide circulant dans le tuyau 1. Le tuyau 1 est fixé au support 3 au moyen d'une vis raccord 5 coaxiale à la partie 11.

Selon un premier mode de réalisation, tel que représenté à la figure 1, la partie 11 du tuyau 1 est sensiblement perpendiculaire à l'axe L et est insérée coaxialement dans le support 3.

Le support 3 comporte deux extrémités 9, 10. Il est fixé par l'une de ses extrémités, appelée première extrémité 9, à la ligne d'échappement 2. La deuxième extrémité 10 du support 3 comporte une rainure 6 selon l'axe M débouchant sur l'extérieur.

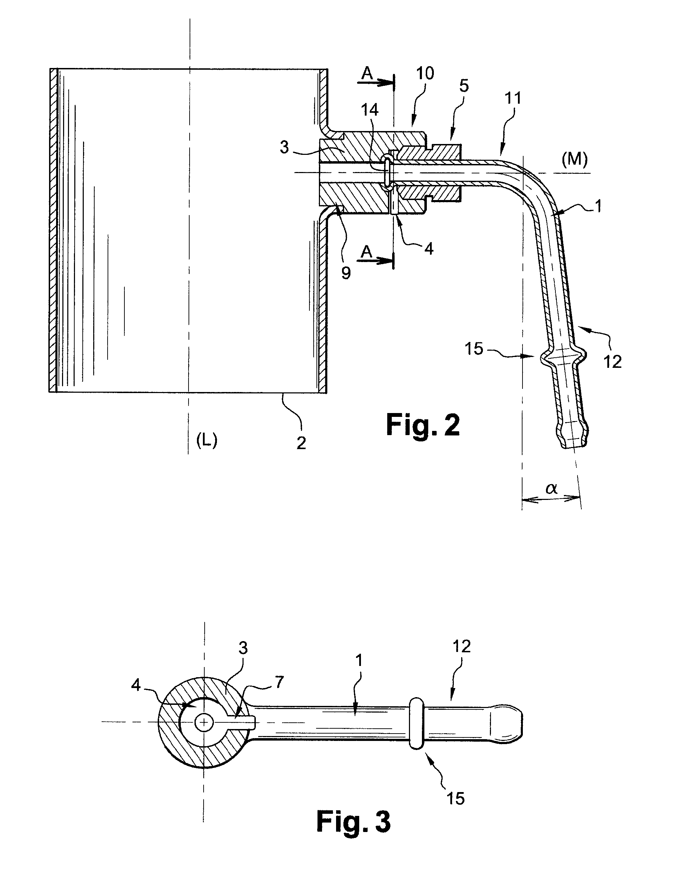

Tel que représenté à la figure 2, à l'extrémité de la partie 11 et sur la partie 12, le tuyau 1 comporte respectivement une butée 14 et 15, qui, dans notre exemple de réalisation, est une déformation du tuyau 1 formant un épaulement.

Le tuyau 1 comporte au niveau de l'extrémité de la partie 11 une rondelle plate 4 fixe. La rondelle plate 4 est fixée en appui contre la butée 14 de l'extrémité de la partie 11, par un soudage, par exemple. Telle que représentée à la figure 3, la rondelle plate 4 comporte une extension latérale 7. La rainure 6 et la rondelle plate 4 sont dimensionnées et positionnées de telle façon qu'elles coopèrent et garantissent l'orientation α choisie du tuyau 1 par rapport à l'axe L, 3° dans notre exemple de réalisation. La vis raccord 5 permet par serrage de maintenir l'ensemble sur la ligne d'échappement 2.

La butée 15 permet à un tuyau relié au tuyau 1 de venir en appui sur cette butée 15.

Selon un deuxième mode de réalisation, tel que représenté aux figures 4 et 5, le support 3 est un ensemble comportant un raccord 31, une vis 33 d'axe V et des joints 32. La vis 33 est inséré dans la ligne d'échappement selon l'axe V et est fixé à la ligne d'échappement 2 par fluoperçage, par exemple. Le raccord 31 est formé de deux parties tubulaires 31 a, 31 b sensiblement perpendiculaires l'une par rapport à l'autre. Une des parties tubulaires 31 a est disposé coaxialement autour de la vis 33. Des joints 32 métalliques (en cuivre, par exemple) assure l'étanchéité entre la partie tubulaire 31 a et le support 3 et entre la ligne d'échappement 2 et la partie tubulaire 31 a. Ces joints 32 sont placés aux extrémités circulaires du cylindre 31 a. L'autre cylindre 31 b reçoit le tuyau 1 et comporte une rainure 6. La partie 11 d'axe M est insérée coaxialement dans le cylindre 31 b. De la même manière que le premier mode de réalisation, le tuyau 1 comporte une rondelle plate 4 dont l'extension latérale 7 coopère avec la rainure 6. La rainure 6 et la rondelle plate 4 sont dimensionnées et positionnées de telle façon qu'elles garantissent l'orientation choisie du tuyau 1 par rapport à l'axe V, 3° dans notre exemple de réalisation. La vis raccord 5 permet par serrage de maintenir l'ensemble sur la ligne d'échappement 2.

De la même façon, les butées 14, 15 ont les mêmes fonctions définies dans le premier mode de réalisation.

Pour réaliser le montage d'un tuyau 1 indexé sur une ligne d'échappement 2, la ligne d'échappement 2 est assemblée à un support 3 par exemple, par fluoperçage ou soudage. La vis raccord 5 est enfilée sur le tuyau 1. La rondelle plate 4 est fixée à l'extrémité de la partie 11. Ensuite, les butées 14, 15 du tuyau 1 indexé sont réalisées à l'extrémité de la partie 11 et sur la partie 12 du tuyau 1. La rondelle plate 4 est fixée en appui contre la butée 14.

La rondelle plate 4 est positionnée dans le support 3 de telle façon que l'extension latérale 7 coopère avec la rainure 6 du support 3. La vis raccord 5 est alors vissée dans le support 3.

Pour chacun des modes de réalisation, le tuyau 1, la rondelle plate 4, le support 3, la vis raccord 5 doivent résister à des températures élevées (jusqu'à 250°C) transmises par la ligne d'échappement 2 mais également à la corrosion et aux problèmes d'étanchéité. Ces éléments 1, 4, peuvent donc être choisis en acier de type Inox 304L.

Le soudage et/ou le fluoperçage doivent être réalisés de façon à assurer le bon positionnement de la rainure et de la rondelle plate par rapport à l'axe longitudinal L.

Ces deux modes de réalisation s'appliquent dans le domaine de l'échappement mais il n'est pas exclu d'appliquer cet agencement à d'autres domaines techniques pour des types de tuyaux différents.

## Revendications

1. Dispositif de positionnement d'un tuyau (1) rigide par rapport à une tuyauterie (2) d'axe (L) **caractérisé en ce que** le tuyau (1) rigide comporte un élément d'indexage, formé d'une rondelle plate (4) pourvue d'une extension latérale (7) sur un support (3) porté par la tuyauterie (2) de façon à assurer un positionnement géométrique précis du tuyau (1) rigide par rapport à l'axe (L).

2. Dispositif de positionnement d'un tuyau (1) rigide selon la revendication 1, **caractérisé en ce que** le support (3) comporte une rainure (6) coopérant avec l'extension latérale (7) de la rondelle plate (4).

3. Dispositif de positionnement d'un tuyau (1) rigide selon l'une quelconque des revendications précédentes, **caractérisé en ce que** la rondelle plate (4) est fixée sur le tuyau (1) par soudage.

4. Dispositif de positionnement d'un tuyau (1) rigide selon l'une quelconque des revendications précédentes, **caractérisé en ce que** le support (3) est fixé sur la tuyauterie (2) par soudage.

5. Dispositif de positionnement d'un tuyau (1) rigide selon l'une quelconque des revendications précédentes 1 à 3, **caractérisé en ce que** le support (3) est fixé sur la tuyauterie (2) par fluoperçage.

6. Dispositif de positionnement d'un tuyau (1) rigide selon l'une quelconque des revendications précédentes, **caractérisé en ce que** le tuyau (1) est monté radialement sur le support (3).

7. Dispositif de positionnement d'un tuyau (1) rigide selon l'une quelconque des revendications précédentes, **caractérisé en ce que** la rondelle plate (4) est fixée en appui contre une butée (14) de l'extrémité (11) du tuyau (1).

8. Dispositif de positionnement d'un tuyau (1) rigide selon l'une quelconque des revendications précédentes, **caractérisé en ce que** le tuyau (1) est un tuyau de prise de pression et **en ce que** la tuyauterie (2) est une ligne d'échappement.

9. Ligne d'échappement (2) comportant un tuyau (1) rigide ayant un dispositif de positionnement selon l'une quelconque des revendications précédentes.

10. Procédé de montage d'un dispositif de positionnement d'un tuyau (1) rigide selon l'une des revendications 1 à 8, **caractérisé en ce qu'**
- une vis raccord (5) est enfilée sur le tuyau (1)
- la rondelle plate (4) est fixée à l'extrémité (11) du tuyau (1)
- une butée (14) est réalisée à l'extrémité (11) de façon à former un appui pour la rondelle plate (4)
- le tuyau (1) est inséré dans le support (3) de telle façon que l'extension latérale (7) de la rondelle plate (4) coopère avec la rainure (6) du support (3)
- la vis raccord (5) est vissée dans le support (3)
